# EUROPEAN PATENT SPECIFICATION

(11) **EP 4 107 804 B1**
(45) Date of publication and mention of the grant of the patent: **09.10.2024**
(21) Application number: 21713150.7
(22) Date of filing: 20.02.2021
(51) Int. Cl.: H01M 8/0263, H01M 8/04007

(54) **FUEL CELL STACK WITH A BIPOLAR FLOW FIELD PLATE**
BRENNSTOFFZELLENSTAPEL MIT EINER BIPOLAREN STRÖMUNGSFELDPLATTE
EMPILEMENT DE PILES À COMBUSTIBLE À PLAQUE DE CHAMP D'ÉCOULEMENT BIPOLAIRE

(30) Priority: 21.02.2020 IN 202041007496
(43) Date of publication of application: 28.12.2022
(73) Proprietor: TVS Motor Company Limited, 600006 Chennai (IN)
(72) Inventor: KOMPELLA VENKATA NAGA SATYA, Harika, Chennai, 600 006 (IN); PRAMILA RAO, Nileshwar, Chennai, 600 006 (IN); SAMRAJ JABEZ, Dhinagar, Chennai, 600 006 (IN)
(74) Representative: Patentanwaltskanzlei Matschnig & Forsthuber OG
(86) International application number: PCT/IN2021/050163
(87) International publication number: WO 2021/165994

(56) References cited:
- WO-A1-2009/010067
- US-A- 6 066 408
- US-A1- 2004 112 740

## Description

### TECHNICAL FIELD OF INVENTION

The invention generally relates to a fuel cell stack and more particularly to a bipolar flow field plate and a fuel cell stack, see claims 1 and 9 respectively.

### BACKGROUND

A fuel cell is an electrochemical device that generates electricity on reaction between a fuel, that is, hydrogen and oxygen. Pure oxygen or air containing a large amount of oxygen reacts with pure hydrogen or a fuel containing a large amount of hydrogen in the fuel cell. Hydrogen may be generated by reforming a hydrocarbon fuel, such as methanol. The fuel is channeled through a flow field plate to an anode on one side of a proton exchange membrane in the fuel cell and oxygen is channeled through another flow field plate to the cathode on another side of the proton exchange membrane. Electrochemical reactions occur at the anode and the cathode to produce electricity, water, and heat. However, flow field plates account for 60% of the cost of a fuel cell and an optimal design of the flow field plate is critical to the performance of the fuel cell.

WO 2009/010067 A1, according to its abstract, describes a bipolar plate for a fuel cell, the bipolar plate having flow channels for oxidant gas; said flow channels for oxidant gas comprising one or more grooves each representing a serpentine path. Each of said serpentine path independently comprises a plurality of consecutive legs connected to each other by consecutive turn sections.

### BRIEF DESCRIPTION OF DRAWINGS

A bipolar flow field plate for being positioned between a pair of membrane assemblies of fuel cell assemblies, and a fuel cell stack according to the present invention are defined respectively in claims 1 and 9.

Further embodiments of the present invention are defined in the dependent claims.

The foregoing summary, as well as the following detailed description of the invention, is better understood when read in conjunction with the appended drawings. For the purpose of illustrating the invention, exemplary constructions of the invention are shown in the drawings. However, the invention is not limited to the specific structures and methods disclosed herein. The description of a structure referenced by a numeral in a drawing is applicable to the description of that structure shown by that same numeral in any subsequent drawing herein.
Figs. **1A-1B** exemplarily illustrate perspective views of a fuel cell stack;
Fig. **2** exemplarily illustrates an exploded perspective view of the fuel cell stack exemplarily illustrated in Fig. **1A****;**
Fig. **3** exemplarily illustrates an exploded view of an embodiment of a pair of fuel cell assemblies in the fuel cell stack;
Fig. **4** exemplarily illustrates a front perspective view of a bipolar flow field plate in the pair of fuel cell assemblies exemplarily illustrated in Fig. **3****;**
Fig. **5** exemplarily illustrates an elevation view of a rear surface of the bipolar flow field plate exemplarily illustrated in Fig. **4****;**
Fig. **6** exemplarily illustrates an enlarged partial front perspective view of the bipolar plate showing multiple bypass grooves;
Fig. **7** exemplarily illustrates an enlarged partial front perspective view of the bipolar plate showing a stopper rib;
Fig. **8** exemplarily illustrates an elevation view of an elastic member accommodated in a groove of the bipolar plate or a current collector plate;
Fig. **9** exemplarily illustrates an elevation view of a membrane electrode assembly
Fig. **10** exemplarily illustrates an elevation view of a current collector plate of the fuel cell stack;
Figs. **11A-11B** exemplarily illustrate elevation views of a front surface and a rear surface of an end plate of the fuel cell stack; and
Figs. **12A-12B** exemplarily illustrate elevation views of a front surface and a rear surface of another end plate of the fuel cell stack.

### DETAILED DESCRIPTION OF THE INVENTION

Various designs of flow field plates to channelize the fuel and air towards the proton exchange membrane are available. One such design of the flow field plate, for low temperature proton exchange membrane fuel cells (PEMFC), is to have two single serpentine channels running parallel to each other such that one serpentine channel covers half of the flow area of the flow field plate and other serpentine channel covers the other half of the flow field plate. These two single serpentine channels are connected to an inlet manifold of the PEM fuel cell through a header. The same design of the flow field plate is used for both hydrogen and air on either side of the flow field plate. The bipolar plate is made in such a way that the flow field of hydrogen on one side (anode side) is at right angle to the flow field of air/oxygen on other side (cathode side).

However, when a stack is assembled with such bipolar plates, flow field on one side is vertical in direction and another flow field is horizontal in direction. When humidified gases (hydrogen and oxygen) pass through the single serpentine channels, water clogging is observed in a lower portion of the horizontal flow field due to gravity, while upper portion of the horizontal flow field is dried, thereby affecting the performance of the fuel cell. There is a need to avoid water clogging from occurring in the bipolar plate for preventing deterioration in the performance of the fuel cell.

Further, heat is being generated in the fuel cell due to the electrochemical reaction and the generated heat has to be removed continuously with the help of a coolant, for example, air or liquid, to maintain operating temperature of the fuel cell. The operating temperature for low temperature PEMFC is about -30°C to - 80°C and the operating temperature for high temperature PEMFC is about 80°C to 160°C. If this operating temperature is not maintained, permanent damage may occur to the membrane electrode assembly and the membrane electrode assembly needs replacement.

To maintain the operating temperature of the fuel cell stack, a coolant needs to be re-circulated in the stack continuously to maintain the temperature. If air is used as a coolant, then coolant air is sent along with reactant air which flows through the flow field and cools the stack. However, such passage of coolant along the flow field plate along with the reactant air results in leaching of acids from membrane electrode assembly, carbon corrosion of carbon-based materials, such as, gas diffusion layer, catalyst poisoning due to the presence of CO, etc., resulting in degradation of performance of the fuel cell. To address such scenarios of degradation in the performance of the fuel cells, separate manifolds/channels to use air or any liquid coolant apart from the inlet manifolds/channels for the reactive air may be provided. Such an arrangement may require installation of additional components, adding to the cost of manufacturing and maintenance in the PEMFC. Therefore, there exists a need for circulating a coolant in the PEMFC without degrading the performance of the PEMFC.

Furthermore, another existing design of the flow field plate includes forming flow fields for hydrogen and air on two different plates (monopolar) and seam welding the monopolar plates to obtain a bipolar plate. However, the inlets and outlets for hydrogen and air on both sides of the flow field plate are almost near to each other, resulting in difficulties in sealing especially at the inlets and outlets. Inadequate sealing of the inlets and the outlets may lead to internal combustion of gases.

Humidification plays an important role in low temperature PEM fuel cells as the proton exchange membrane needs water content to transfer the H+ ions from anode to cathode. Humidifying inlet gases will provide the necessary water content for this transfer. However, during this process, sometimes water clogging might happen in flow channel due to condensation of water. The water clogging blocks the incoming reactants to pass through the rest of the flow field, thereby making that particular cell in fuel cell stack non-functional. Also, breakage of a gas diffusion layer (GDL) in a low temperature and a high temperature PEM fuel cell might happen when the fuel cell is over compressed in a fuel cell stack. The GDL which is broken blocks the flow channel, thereby not allowing the reactants to pass through the rest of flow field.

Therefore, there exists a long felt need for a fuel cell stack with one or more bipolar flow field plates that caters for the flow of coolant and reactant, without adding additional cost to the manufacturing and maintenance of the fuel cell stack. The present subject matter addresses the above need for the bipolar flow field plates that allows flow of a coolant and reactants without additional costs.

A bipolar flow field plate in a pair of fuel cell assemblies is disclosed. The bipolar flow field plate includes a front surface comprising at least one serpentine first flow channel extending between an air inlet header and an air outlet header for reactant air. The bipolar flow field plate further includes a rear surface comprising at least one serpentine second flow channel extending between a hydrogen inlet header and a hydrogen outlet header for hydrogen. Each of the first flow channels includes multiple first bypass grooves for bypassing one or more sections of the first flow channels. Each of the second flow channels include a plurality of second bypass grooves for bypassing one or more sections of the second flow channels.

The bipolar flow field plate further includes multiple coolant fins for coolant air formed on the front surface and the rear surface between the air inlet header, the air outlet header, the hydrogen inlet header, and the hydrogen outlet header. The bipolar flow field plate further includes a stopper rib formed on edges of each of the front surface and the rear surface, for preventing excessive compression of an elastic member. The elastic member is accommodated in a groove formed parallel to the stopper rib on the each of the front surface and the rear surface.

The air inlet header and the air outlet header are in-line or perpendicular to the hydrogen inlet header and the hydrogen outlet header. The air inlet header, the air outlet header, and the multiple coolant fins engage with a discharge of an aeration device. The hydrogen inlet header and the hydrogen outlet header engage with an inlet manifold and an outlet manifold for hydrogen on a pair of end plates. The reactant air and hydrogen reactively engage with a membrane electrode assembly in each of the pair of fuel cell assemblies for supplying electric current to an electric circuit. The reactant air from the serpentine first flow channels diffuses towards a cathode surface of the membrane electrode assembly, and hydrogen from the serpentine second flow channels diffuses towards an anode surface of the membrane electrode assembly. The aeration device is a blower or a centrifugal pump.

In an embodiment, a fuel cell stack is disclosed herein including the pair of end plates and the multiple fuel cell assemblies positioned between the pair of end plates. The pair of end plates accommodate the aeration device, the inlet manifold and the outlet manifold for hydrogen on an outer surface. A pair of fuel cell assemblies in the plurality of fuel cell assemblies includes a pair of membrane electrode assemblies and the bipolar flow field plate. Each of the first membrane electrode assembly and the second membrane electrode assembly comprises an anode face and a cathode face. The bipolar flow field plate is positioned between the first membrane electrode assembly and the second membrane electrode assembly.

The fuel cell stack further includes a pair of current collector plates for collecting electric current generated in the plurality of fuel cell assemblies, wherein each current collector plate is positioned between an end plate and the first membrane electrode assembly or the second membrane electrode assembly. Multiple fasteners compress the pair of end plate, the multiple fuel cell assemblies, and the pair of current collector plates together. The detailed description is described below with reference to the accompanying figures.

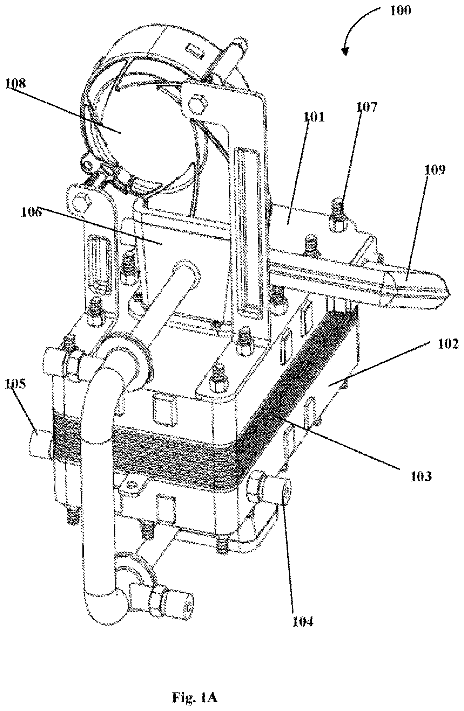

Figs. **1A-1B** exemplarily illustrate perspective views of a fuel cell stack **100.** The fuel cell stack **100** is a stacked arrangement of multiple fuel cell assemblies **103** that generate higher voltage and power than an individual fuel cell assembly. The fuel cell assemblies **103** are connected in series to form the fuel cell stack **100.** In an embodiment, the number of fuel cell assemblies **103** may be increased to increase output voltage of the fuel cell stack **100.** A fuel cell assembly is an electrochemical cell that converts chemical energy of hydrogen and oxygen into electric current and heat through a pair of oxidation and reduction. In the fuel cell assembly, chemical reactions occur between an anode and an electrolyte, and a cathode and the electrolyte. At the anode, hydrogen is oxidized generating positive hydrogen ions and negatively charged electrons. The positive hydrogen ions travel through the electrolyte and the electrons travel through an external circuit. At the cathode, the positive hydrogen ions combine with the electron and oxygen to generate water. Based on the types of the cathode, the anode, and the electrolyte, the fuel cell assembly may be a proton exchange membrane (PEM) fuel cell assembly, a phosphoric acid fuel cell assembly, a solid acid fuel cell assembly, an alkaline fuel cell, etc.

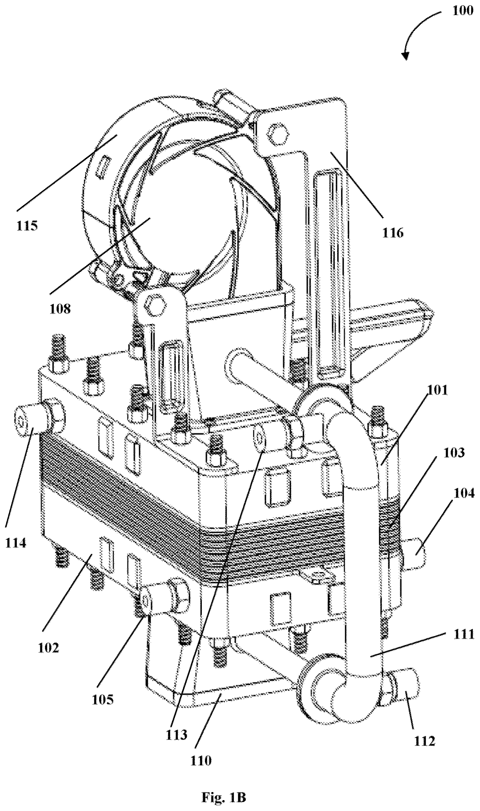

As exemplarily illustrated in Fig. **1A****,** such multiple fuel cell assemblies **103** are stacked between a pair of end plates **101** and **102.** The end plates **101** and **102** have guide holes for fasteners **107,** for example, tie rods, nut and bolt assemblies, belt assembly, spring assembly etc., to apply pressure on the fuel cell assemblies **103** to compress the fuel cell stack **100** intact and prevent escape of gases from the fuel cell assemblies **103.** The torque of tightening the fasteners **107** is maintained uniform to avoid the leakage of gases. The end plates **101** and **102** further include one or more inlet manifolds, such as, **104** for hydrogen, one or more outlet manifolds, such as, **105** for the reactant air, **114** for hydrogen, exemplarily illustrated in Fig. **1B****,** and an inlet duct **106** for the reactant air and the coolant air and an outlet duct **110** for coolant air exemplarily illustrated in Fig. **1B****.** As exemplarily illustrated in Fig. **1A****,** the endplate **101** accommodates an aeration device **108,** such as, a blower. The inlet duct **106** is centrally located on the end plate **101** and receives the discharge of the aeration device **108.** The inlet duct **106** for the reactant air and the coolant air of the fuel cell stack **100** removably engages with the discharge of the aeration device **108.** The reactant air from the inlet duct **106** is fed to the fuel cell assemblies **103** via the inlet piping **109.**

As exemplarily illustrated in Fig. **1B****,** the end plate **102** includes the outlet duct **110** for coolant air, the inlet manifold **104** for hydrogen, and the outlet manifold **105** for the reactant air. The outlet duct **110** is connected to the inlet duct **106** via a recirculation piping **111** through a heat exchanging mechanism, for recirculation of coolant air into the fuel cell stack **100.** In the recirculation piping **111,** an inlet manifold **112,** and an outlet manifold **113** are connected for a coolant fluid to exchange heat with the coolant air from the outlet duct **110.** The aeration device **108** is housed in a housing **115.** The aeration device **108** is supported by brackets **116** on both sides, to position it in an erect position and locate centrally on the end plate **101.** In an embodiment, the inlet manifold **104** and the outlet manifold **114** for hydrogen are positioned on the same end plate, such as, **102.** In an embodiment, the inlet manifold **104** and the outlet manifold **114** for hydrogen may be positioned on different end plates such as, **101** and **102.** The fasteners **107,** such as, tie rods pass through the guide holes present on the end plates **101** and **102** and the fuel cell assemblies **103** and the nuts are tightened on threads of the tie rods to compress the fuel cell assemblies **103** together. By virtue of the fasteners **107,** the fuel cell stack **100** has a dense packaging of the fuel cell assemblies **103.**

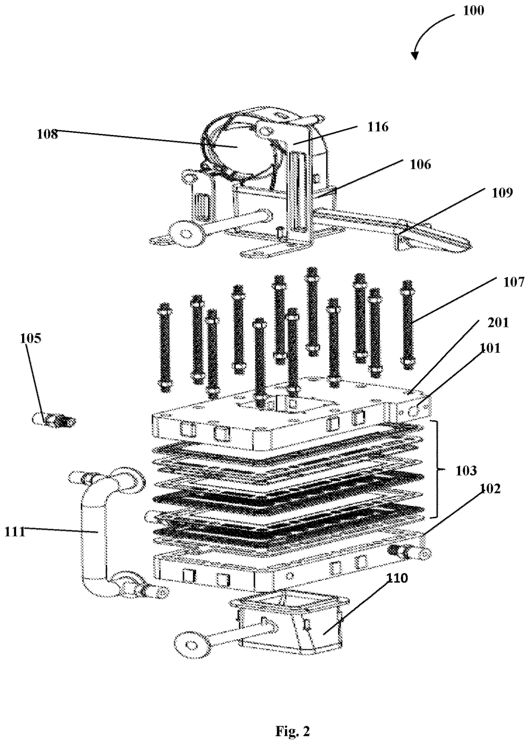

Fig. **2** exemplarily illustrates an exploded perspective view of the fuel cell stack **100** exemplarily illustrated in Fig. **1A****.** As exemplarily illustrated, multiple fuel cell assemblies **103** are stacked together between the end plates **101** and **102** using the fasteners **107.** The fasteners **107** are inserted through the guide holes **201** in the end plates **101** and **102.** The brackets **116** are screwably attached to the end plate **101** to mount the inlet duct **106** centrally on an outer surface of the end plate **101.** The outlet duct **110** is centrally positioned on an outer surface of the end plate **102** using the fasteners **107,** for example, screw and nut assembly. Insertion of the fasteners **107,** that is, tie rods and nuts through the guide holes **201** through the structure of the fuel cell stack **100** ensures proper assembly of the fuel cell stack **100.** The fasteners **107** ensure adequate compression of the structure of the fuel cell stack **100.**

The discharge of the aeration device **108** is connected to the inlet duct **106** of the fuel cell stack **100.** The discharge of the aeration device **108** includes both the reactant air for the electrochemical reaction in the fuel cell assemblies **103** and coolant air to remove the heat generated in the fuel cell stack **100.** The reactant air from the inlet duct **106** is fed to the fuel cell assemblies **103** via the inlet piping **109.** Remaining unreacted reactant air exits from the fuel cell stack **100** via the outlet manifold **105.** The hot coolant air on extraction of heat from the fuel cell assemblies **103** along with the water vapors reaches the outlet duct **110** of the fuel cell stack **100** and is re-circulated to the inlet duct **106** via the recirculation piping **111** accommodating the heat exchanging mechanism. The aeration device **108,** for example, includes a blower which increases the velocity and pressure of air through impellers to supply air for the electrochemical reaction and cooling of the fuel cell stack **100.** The supplied air acts as a source of oxygen for the electrochemical reaction in each fuel cell assembly of the fuel cell stack **100.** Hydrogen is supplied through the inlet manifold **104** in the end plate **102** and unreacted hydrogen remaining after the electrochemical reaction is sent out through the outlet manifold **114** in the end plate **101.** Hydrogen may be derived from substances containing hydrogen, such as, methanol, gasoline, natural gas, and water. Pure hydrogen and oxygen, with no impurities are pressurized and injected into the fuel cell stack **100.**

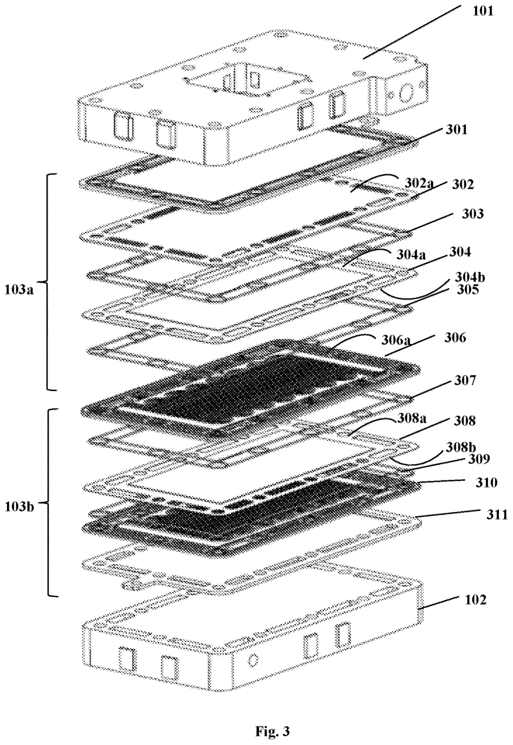

Fig. **3** exemplarily illustrates an exploded perspective view of a pair of fuel cell assemblies **103a** and **103b** in the fuel cell stack **100.** The pair of fuel cell assemblies **103a** and **103b** is compressed between the pair of end plates **101** and **102.** The pair of fuel cell assemblies **103a** and **103b** includes a pair of membrane electrode assemblies, that is, a first membrane electrode assembly **304** and a second membrane electrode assembly **308** and a bipolar flow field plate **306** positioned between the membrane electrode assemblies **304** and **308.** Each of the membrane electrode assemblies **304** and **308** is a combination of an electrolyte, an anode, and a cathode. Each of the membrane electrode assemblies **304** and **308** includes a proton exchange membrane that is selectively permeable, an anode catalyst layer, and a cathode catalyst layer on either sides of the proton exchange membrane, and gas diffusion layers on both sides of the proton exchange membrane. The proton exchange membrane conducts positively charged hydrogen ions and blocks the negatively charged electrons. The cathode catalyst layer forms a cathode surface **304a** and **308a** of the membrane electrode assemblies **304** and **308** respectively. The anode catalyst layer forms an anode surface **304b** and **308b** of the membrane electrode assemblies **304** and **308** respectively. On the anode surface **304b** and **308b** of the membrane electrode assemblies **304** and **308,** hydrogen oxidation reaction takes place splitting hydrogen into positively charged ions and negatively charged electrons. The half-cell oxidation reaction is represented as:

H₂ → 2H⁺ + 2e⁻.

The positively charged ions pass through the membrane electrode assemblies **304** and **308** to the cathode surface **304a** and **308a,** respectively. The electrons travel along an external load circuit to the cathode surface **304a** and **308a** of the membrane electrode assemblies **304** and **308,** thus creating the current output of the fuel cell assemblies **103a** and **103b.** At the cathode surface **304a** and **308a** of the membrane electrode assemblies **304** and **308,** oxygen molecules react with the protons permeating through the proton exchange membrane and the electrons arriving through the external circuit to form water molecules. The half cell reduction reaction is represented as: 1/2 O₂ + 2 H⁺ + 2e ⁻ → H₂O.

On the anode surface **304b** and **308b** and the cathode surface **304a** and **308a** of the membrane electrode assemblies **304** and **308,** respectively, a platinum catalyst enables initiation of the half-cell oxidation reaction and the half-cell reduction reaction, respectively. The gas diffusion layer is positioned above the anode catalyst layer and the cathode catalyst layer of the membrane electrode assembly **304** and **308.** The gas diffusion layer facilitates transport of hydrogen and oxygen into the catalyst layers and also, aids in removal of water generated in the fuel cell assemblies **103a** and **103b.** The gas diffusion layer has pores through which the reactant air and hydrogen diffuse towards the cathode surface **304a** and **308a** and the anode surface **304b** and **308b** of the membrane electrode assemblies **304** and **308.**

As exemplarily illustrated, a bipolar flow field plate **306** is positioned between the first membrane electrode assembly **304** and the second membrane electrode assembly **308.** The bipolar flow field plate **306** is positioned rear side up in the fuel cell stack **100.** A rear surface **306a** of the bipolar flow field plate **306** faces the anode face **304b** of the first membrane electrode assembly **304** and a front surface **306b** of the bipolar flow field plate **306** faces the cathode surface **308a** of the second membrane electrode assembly **308.** The bipolar flow field plate **306** uniformly distributes the reactant air on the front surface **306b** and hydrogen on the rear surface **306a** towards the membrane electrode assembly **308** and **304** respectively. The bipolar flow field plate **306** has flow fields on both surfaces **306a** and **306b** to cater for diffusion of hydrogen and oxygen, respectively. The flow fields may be of different shapes, such as, rectangular, triangular, circular, etc. The flow channels on both surfaces **306a** and **306b** constitute the flow fields for hydrogen and oxygen respectively. On the front surface **306b** of the bipolar flow field plate **306**, at least one serpentine first flow channel of the reactant air is formed and on the rear surface **306a** of the bipolar flow field plate **306,** at least one serpentine second flow channel of hydrogen is formed. The first flow channels of the bipolar flow field plate **306** cater to the electrochemical reaction in the fuel cell assembly **103b** and the second flow channels of the bipolar flow field plate **306** cater to the electrochemical reaction in the adjacent fuel cell assembly **103a.** The bipolar flow field plate **306** with the front surface **306b** and the rear surface **306a** is exemplarily illustrated in Figs. **3****,** **4****,** and **5****.**

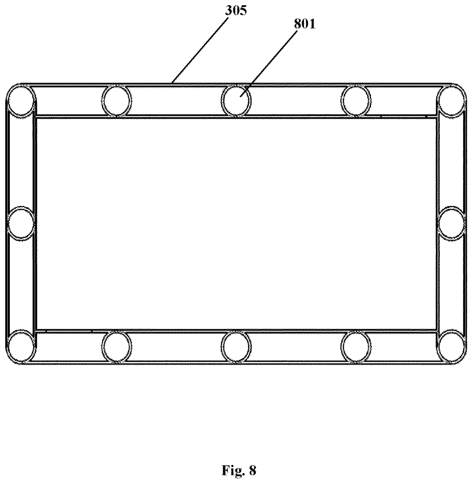

An elastic member **305,** for example, a gasket is positioned between the bipolar flow field plate **306** and the membrane electrode assembly **304.** An elastic member **307,** for example, a gasket is positioned between the bipolar flow field plate **306** and the membrane electrode assembly **308.** The elastic members **305** and **307,** exemplarily illustrated in Fig.**8** provide a seal to prevent undue leakage of hydrogen or oxygen in the fuel cell stack **100.** The fuel cell assemblies **103a** and **103b** include a pair of current collector plates **301** and **311** for collecting the current generated in the fuel cell assemblies **103a** and **103b.** The current collector plates **301** and **311** connect the fuel cell assemblies **103a** and **103b** to external loads. A pair of monopolar plates **302** and **310** is positioned against the monopolar plate **302** and the monopolar plate **310** respectively. Each monopolar plate **302** and **310** includes a flow field for oxygen or hydrogen on a front surface **302b** and a rear surface **310a** facing the membrane electrode assemblies **304** and **308.** The front surface **302b** of the monopolar plate **302** facing the cathode surface **304a** of the first membrane electrode assembly **304** resembles the first flow channels of oxygen of the bipolar flow field plate **306** and the rear surface **310a** of the monopolar plate **310** facing the anode surface **308b** of the second membrane electrode assembly **308** resembles the second flow channels of hydrogen of the bipolar flow field plate **306.**

Another pair of elastic members **303** and **309** is positioned between the monopolar plates **302** and **310** and the membrane electrode assembly **304** and **308** of the fuel cell assemblies **103a** and **103b,** respectively. The elastic member **303** provides a mechanical seal between the front surface **302b** of the monopolar plate **302** and the cathode surface **304a** of the membrane electrode assembly **304.** The elastic member **309** provides a mechanical seal between the front surface **310a** of the monopolar plate **310** and the anode surface **308b** of the membrane electrode assembly **308** to prevent leakage of oxygen or hydrogen that flows through the flow field of the monopolar plates **302** and **310,** respectively.

Each of the membrane electrode assemblies **304** and **308,** the monopolar plates **302** and **310,** the current collector plates **301** and **311,** the bipolar flow field plate **306,** and the elastic members **303, 305, 307,** and **309** have a guide holes in proximity to the edges of each of them for accommodating the fasteners **107.** The fasteners **107** through the guide holes **201** compress the membrane electrode assemblies **304** and **308,** the monopolar plates **302** and **310,** the current collector plates **301** and **311,** the bipolar flow field plate **306,** and the elastic members **303, 305, 307,** and **309** together.

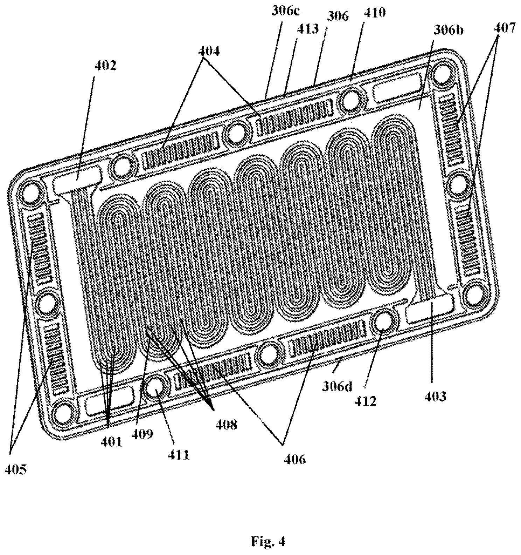

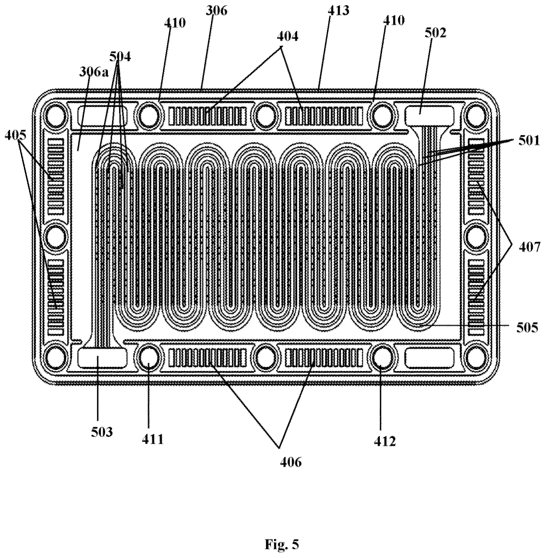

Fig. **4** exemplarily illustrates a front perspective view of the bipolar flow field plate **306** between the pair of fuel cell assemblies **103a** and **103b.** The front surface **306b** faces the cathode surface **308a** of the second membrane electrode assembly **308** and the rear surface **306a,** rear of the front surface **306b** faces the anode surface **304b** of the first membrane electrode assembly **304.** The front surface **306b** includes multiple flow channels, for example, four serpentine flow channels **401** for the reactant air to flow and the rear surface **306a** includes multiple flow channels, for example, four serpentine flow channels **501** for hydrogen to flow as exemplarily illustrated in Fig. **5****.** The four serpentine first flow channels **401** extend from an air inlet header **402** up to an air outlet header **403** forming a flow field for the reactant air on the front surface **306b.** The air inlet header **402** is located in proximity to a first edge **306c** of the bipolar flow field plate **306** and the air outlet header **403** is located in proximity to a second edge **306d** of the bipolar flow field plate **306** on the front surface **306b.** The air inlet header **402** and the air outlet header **403** are through holes on the front surface **306b.** The air inlet header **402** is connected to the inlet duct **106** of the fuel cell stack **100** and the air outlet header **403** is connected to the outlet duct **110** of the fuel cell stack **100.** The difference in pressure of the reactant air between the air inlet header **402** and the air outlet header **403** of the flow field of the reactant air drives the flow of the reactant air on the front surface **306b.**

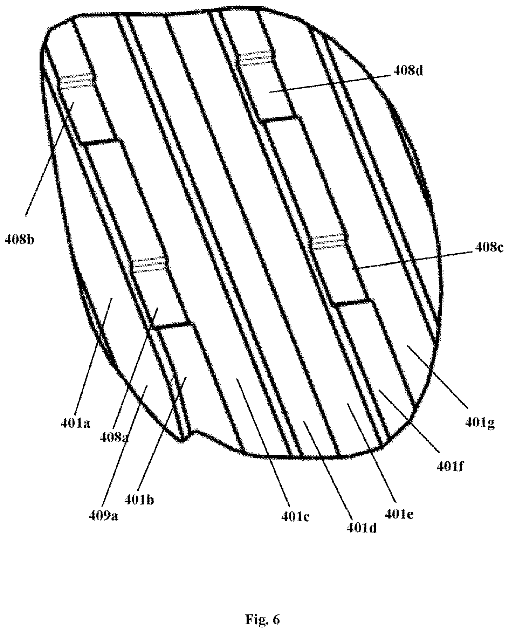

The aeration device **108** blows the reactant air and the coolant air onto the fuel cell assemblies **103** at a predetermined pressure. The coolant air flows through coolant fins **404, 405, 406,** and **407** formed on the front surface **306b** and the rear surface **306a** of the bipolar flow field plate **306.** The coolant air flows from the inlet duct **106** over the coolant fins **404, 405, 406,** and **407** towards the outlet duct **110** and removes heat from the fuel cell stack **100** by forced convection. The reactant air flows through the first flow channels **401** to participate in the electrochemical reaction. The reactant air from the first flow channels **401** diffuses towards the cathode surface **308a** of the membrane electrode assembly **308.** The first flow channels **401** further include first bypass grooves **408** for bypassing one or more sections **409** of the first flow channels **401.** The first flow channels **401** are depressions of a predetermined depth on the front surface **306b** of the bipolar flow field plate **306,** that results in raised edges along the length of the first flow channels **401.** The first bypass grooves **408** are channels intermittently formed on the raised edges of the first flow channels **401.** The reactant air flowing in one of the first flow channels **401** may bypass the section of the first flow channel below the bypass groove, such as, **408** and flow into a consecutive first flow channel on the front surface **306b** as exemplarily illustrated in Fig. **6****.** Such flow of the reactant air through the first bypass grooves **408** ensures the reactant air reaches the cathode surface **308a** of the membrane electrode assembly **308** for the electrochemical reaction faster than usual.

The bipolar flow field plate **306** further includes a groove **410** formed on the edges of the front surface **306b** along the length of the first flow channels **401.** The groove **410** accommodates the elastic member **307,** that is, the gasket. The bipolar flow field plate **306** further includes the guide holes, such as, **411, 412** to accommodate the fasteners **106** through them. The groove **410** is formed around the guide holes **411, 412,** the air inlet header **402,** the air outlet header **403,** the coolant fins **404, 405, 406,** and **407,** the hydrogen inlet header, and the hydrogen outlet header due to the raised edges of the guide holes **411, 412,** the air inlet header **402,** the air outlet header **403,** the coolant fins **404, 405, 406,** and **407,** the hydrogen inlet header, and the hydrogen outlet header. A stopper rib **413** is formed on the edges of the front surface **306b** parallel to the groove **410** at the edges of the front surface **306b** for preventing excessive compression of the elastic member in the fuel cell stack **100,** when the elastic member is positioned in the groove **410.**

Fig. **5** exemplarily illustrates an elevation view of the rear surface **306a** of the bipolar flow field plate **306** exemplarily illustrated in Fig. **4****.** The rear surface **306a** of the bipolar flow field plate **306** includes, for example, four serpentine second flow channels **501** for hydrogen to flow. The four serpentine second flow channels **501** extend from the hydrogen inlet header **502** up to the hydrogen outlet header **503** forming a flow field for hydrogen on the rear surface **306a**. The hydrogen inlet header **502** is located in proximity to the first edge **306c** of the bipolar flow field plate **306** and the hydrogen outlet header **503** is located in proximity to the second edge **306d** of the bipolar flow field plate **306** on the rear surface **306a.** The hydrogen inlet header **502** and the hydrogen outlet header **503** are through-holes on the rear surface **306a.** The hydrogen inlet header **502** is connected to the inlet manifold **104** of the fuel cell stack **100** and the hydrogen outlet header **503** is connected to the outlet manifold **114** of the fuel cell stack **100.** The difference in pressure of hydrogen between the hydrogen inlet header **502** and the hydrogen outlet header **503** of the flow field of hydrogen drives the flow of hydrogen on the rear surface **306a** of the bipolar flow field plate **306.** Pressure drop occurs along the length of the second flow channels **501** and thus, hydrogen supplied at the hydrogen inlet header **502** from the inlet manifold **104** is at a higher pressure.

Hydrogen flows through the second flow channels **501** to participate in the electrochemical reaction. Hydrogen from the second flow channels **501** diffuses towards the anode surface **304b** of the membrane electrode assembly **304.** The second flow channels **501** further include second bypass grooves **504** for bypassing one or more sections **505** of the second flow channels **501.** The second flow channels **501** are depressions of a predetermined depth on the rear surface **306a** of the bipolar flow field plate **306,** that results in raised edges along the length of the second flow channels **501.** The second bypass grooves **504** are channels intermittently formed on the raised edges of the second flow channels **501.** Hydrogen flowing in one of the second flow channels **501** may bypass the section of the second flow channel below the bypass groove and flow into a consecutive second flow channel on the rear surface **306a.** Such flow of hydrogen through the second bypass grooves **504** ensures hydrogen reaches the anode surface **304b** of the membrane electrode assembly **304** for the electrochemical reaction faster than usual.

The bipolar flow field plate **306** further includes a groove **410** formed on the edges of the rear surface **306a** along the length of the second flow channels **501.** The groove **410** accommodates the elastic member **305,** that is, the gasket. The bipolar flow field plate **306** further includes the guide holes, such as, **411, 412** to accommodate the fasteners **106** through them. The groove **410** is formed around the guide holes **411, 412,** the air inlet header **402,** the air outlet header **403,** the coolant fins **404, 405, 406,** and **407,** the hydrogen inlet header **502,** and the hydrogen outlet header **503** due to the raised edges around each of them **411, 412, 402, 403, 404, 405, 406, 407, 502,** and **503.** A stopper rib **413** is formed on the edges of the rear surface **306a** parallel to the groove **410** at the edges of the rear surface **306a** for preventing excessive compression of the elastic member in the fuel cell stack **100,** when the elastic member is positioned in the groove **410.**

In an embodiment, the number of first flow channels may be same as the number of second flow channels, such as **401** and **501.** In another embodiment, the number of first flow channels **401** may be less than the number of second flow channels **501.** In another embodiment, the number of first flow channels **401** may be greater than the number of second flow channels **501.** The bipolar flow field plate **306** is made of graphite, by virtue of which the bipolar flow field plate **306** possesses high corrosion resistance, low bulk resistivity, and low contact resistance with gas diffusion layer materials. The air inlet header **402,** the air outlet header **403,** the hydrogen inlet header **502,** and the hydrogen outlet header **503** are exemplarily illustrated to be rectangular in shape. The shape of the air inlet header **402,** the air outlet header **403,** the hydrogen inlet header **502,** and the hydrogen outlet header **503** may be same or different. In an embodiment, the shape of the air inlet header **402,** the air outlet header **403,** the hydrogen inlet header **502,** and the hydrogen outlet header **503** may be circular, triangular, club-shaped, etc.

The direction of flow of the reactant air and hydrogen in the first flow channels **401** and the second flow channels **501** is counter-flow to each other i.e. in opposing directions. In an embodiment, the air inlet header **402,** the air outlet header **403,** the hydrogen inlet header **502,** and the hydrogen outlet header **503** may be formed in manner to ensure flow of the reactant air and hydrogen may be in the same direction on both sides of the bipolar flow field plate **306.** The serpentine first flow channels **401** and the serpentine second flow channels **501** force the reactants, that is, air and hydrogen, to flow across entire active area of the front surface **306b** and the rear surface **306a** to eliminate stagnant areas due to improper reactant distribution. The flow of the reactant air and hydrogen through the first flow channels **401** and the second flow channels **501** may be laminar or turbulent. The serpentine second flow channels **501 on** the rear surface **306a** limit the pressure drop along the first flow channels **501** and manage water accumulation in the fuel cell stack **100.** Since the first flow channels **401** and the second flow channels **501** are on either side of the bipolar flow field plate **306**, crossover of air and hydrogen at the inlet of the bipolar flow field plate **306** is prevented.

Fig. **6** exemplarily illustrates an enlarged partial front perspective view of the bipolar flow field plate **306** showing the first bypass grooves **408** including **408a, 408b, 408c, 408d** on the front surface **306b** of the bipolar flow field plate **306.** As exemplarily illustrated, the first flow channels **401a, 401e,** and **401g** are depressions of a certain depth on the front surface **306b.** The serpentine first flow channels **401a, 401c, 401e,** and **401g** are contiguous with uniform width, run parallel to each other, and terminate at the air outlet header **403.** On both sides of the depression are raised edges **401b, 401d,** and **401f** respectively, along the length of the first flow channels **401a, 401c, 401e,** and **401g.** On the raised edges **401b** and **401f** of the first flow channels **401a, 401c, 401e,** and **401g,** the first bypass grooves **408a, 408b, 408c,** and **408d** are intermittently formed. The reactant air flowing in the first flow channel **401a** may bypass the section **409a** of the first flow channel **401a** below the bypass groove **408a** and flow into the successive first flow channel **401c** on the front surface **306b.** The width of the bypass groove **408a** is less than the width of the first flow channel **401a** to ensure only a limited amount of the reactant air bypasses the lower section **409a** of the first flow channel **401a.** The reactant air bypasses the section **409a** of the first flow channel **401a,** in case of water logging in the section **409a** of the first flow channel **401a.**

The first bypass grooves **408a, 408b, 408c,** and **408d** facilitate rapid movement of the reactant air towards the membrane electrode assembly **304** or **308** and ensuring maximum participation of the reactant air in the electrochemical reaction. This ensures substantially less amount of unreacted air exits from the bipolar flow field plate **306.** Similarly, the second bypass grooves **504** present on the rear surface **306a** of the bipolar flow field plate **306** are of substantially same dimensions as on the front surface **306b** to ensure maximum participation of hydrogen in the electro chemical reaction, as disclosed in the detailed description of Fig. **5****.**

In an embodiment, the number of bypass grooves, such as, **408a, 408b, 408c,** and **408d** and the location of the bypass grooves, such as, **408a, 408b, 408c,** and **408d** along the length of the flow channels **401** and **501,** is same across all the flow channels **401** and **501 on** the front surface **306b** and the rear surface **306a** of the bipolar flow field plate **306.** In an embodiment, the number of bypass grooves, such as, **408a, 408b, 408c,** and **408d** and the location of the bypass grooves, such as, **408a, 408b, 408c,** and **408d** along the length of the flow channels **401** and **501** is different on the front surface **306b** and the rear surface **306a** of the bipolar flow field plate **306.** In an embodiment, the dimensions, for example, the length, the width, and the depth of the bypass grooves, such as, **408a, 408b, 408c,** and **408d** in each of the flow channels **401** and **501** are equal. In an embodiment, the dimensions, for example, the length, the width, and the depth of the bypass grooves, such as, **408a, 408b, 408c,** and **408d** in each of the flow channels **401** and **501** are unequal.

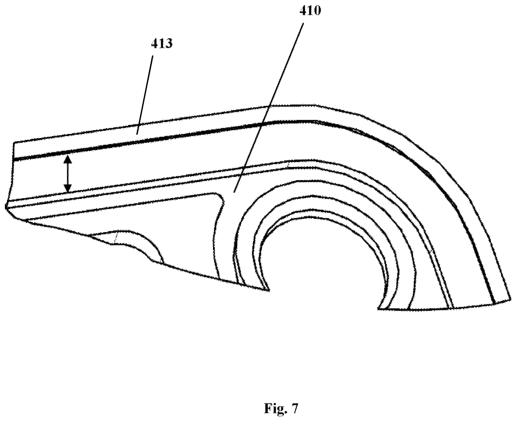

Fig. 7 exemplarily illustrates an enlarged partial front perspective view of the bipolar flow field plate **306** showing the stopper rib **413** on the front surface **306b** of the bipolar flow field plate **306.** The stopper rib **413** is formed on the edges of the front surface **306b** on the outer perimeter of the bipolar flow field plate **306.** The elastic member is positioned in the groove **410** around the raised edges of the guide holes **411, 412,** the air inlet header **402,** the air outlet header **403,** the coolant fins **404, 405, 406,** and **407,** the hydrogen inlet header **502,** and the hydrogen outlet header **503** for preventing excessive compression of the elastic member in the fuel cell stack **100.** Similar stopper rib **413** is formed on the rear surface **306a** of the bipolar flow field plate **306.** The stopper rib **413** prevents excessive compression of the elastic members on both the sides of the bipolar flow field plate **306**. The stopper rib **413** prevents direct contact of the bipolar flow field plate **306** with the membrane electrode assembly **304** and **308,** avoiding breakage of the bipolar flow field plate **306** and the membrane electrode assembly **304** and **308** due to the compressive forces in the fuel cell stack **100,** even though the graphite bipolar flow field plate **306** is brittle.

Fig. **8** exemplarily illustrates an elevation view of an elastic member, such as, **303, 305, 307,** and **309** that engages with the bipolar flow field plate **306**, the monopolar plates **302** and **310,** or the current collector plates **301** and **311.** The elastic members **303, 305, 307,** and **309** are, for example, a gasket. The elastic members **305** and **307** are accommodated in the groove **410** on the front surface **306b** and the rear surface **306a** of the bipolar flow field plate **306.** Similarly, the elastic members **303** and **309** are accommodated in the grooves (not shown) of the monopolar flow field plates **302** and **310** respectively. The elastic members **303, 305, 307,** and **309** prevent leak of hydrogen and air and provide reactant tightness, when the fuel cell assemblies **103** are compressed. The elastic members **303, 305, 307,** and **309** also provide vibration and shock resistance to the fuel cell stack **100,** and prevent mechanical bonding of components when compressed in the fuel cell stack **100.** The elastic members **303, 305, 307,** and **309** are made of materials, such as, silicon, Polytetrafluoroethylene (PTFE), Ethylene Propylene Diene Monomer (EPDM) rubber, etc., that have greater compressibility and good sealing properties.

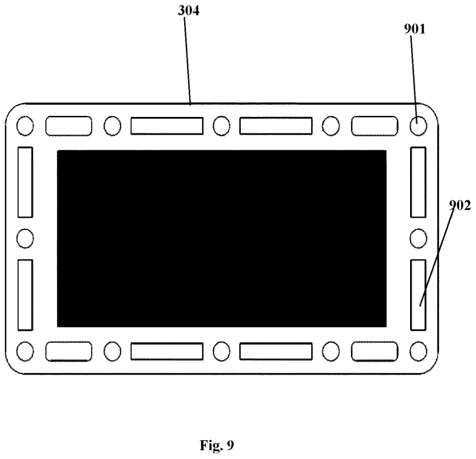

The elastic members **305** and **307** seal non-active regions of the bipolar flow field plate **306** and expose the active regions of the bipolar flow field plate **306** to the membrane electrode assemblies **304** and **308.** The active regions are the flow fields formed by the first flow channels **401** and the second flow channels **501** along with the air inlet header **402,** the air outlet header **403,** the hydrogen inlet header **502,** and the hydrogen outlet header **503.** On the monopolar plates **302** and **310,** the elastic members **303** and **309** seal the non-active regions and expose the active regions to the membrane electrode assemblies **304** and **308.** The elastic members **303, 305, 307,** and **309** may be in pre-cut form or may be formed-in-place. The formed-in-place type elastic member may be cured by activation and exposure to radiation, while assembling the fuel cell stack **100.** The elastic members **303, 305, 307,** and **309,** further include multiple guide holes, such as, **801** similar to and in-line with the guide holes **411, 412** of the bipolar flow field plate **306** to accommodate the fasteners **107** to hold the structure of the fuel cell stack **100** intact. The elastic members **303, 305, 307,** and **309** are nonconductive and provide electrical insulation between the bipolar flow field plate **306** and the membrane electrode assemblies **304** and **308,** and the monopolar plates **302** and **310** and the membrane electrode assemblies **304** and **308.** The elastic members **303, 305, 307,** and **309** further expose the coolant fins **407** of the bipolar flow field plate and coolant fins **902** of the membrane electrode assembly, such as, **304** as exemplarily illustrated in Fig. **9****.**

Fig. **9** exemplarily illustrates an elevation view of a membrane electrode assembly, such as, **304** and **308** of the fuel cell assembly, for example, **103a** and **103b.** The membrane electrode assembly, for example, **304** is a central element of a fuel cell assembly **103a** in the fuel cell stack **100** around which the elastic members **303** and **305** and the flow fields are designed and positioned. In the membrane electrode assembly **304,** the electrolyte, the electrodes, that is, the anode face **304b** and the cathode face **304a,** and the reactants, oxygen and hydrogen are all in contact. Since ambient air is used instead of pure oxygen, the amount of oxygen available for the electrochemical reaction is less, and thus, the membrane electrode assembly **304** is thin for lower resistance in the fuel cell assembly **103a.** Further, the catalyst layer on the anode face **304b** and the cathode face **304a** in the membrane electrode assembly **304** reduces the cost of the membrane electrode assembly **304.** The membrane electrode assembly **304** optimizes the efficiency of portable applications and stationary application of the fuel cell stack **100.** The membrane electrode assembly **304** allows proton transport while obstructing the reactants, that is, hydrogen and oxygen at lower temperatures of about 20°C to about 80°C. As exemplarily illustrated, the membrane electrode assembly **304** also has guide holes, such as, **901** in line with the guide holes **411** and **412** of the bipolar flow field plate **306** to accommodate the fasteners **107,** similar to the elastic members **303, 305, 307,** and **309.** The membrane electrode assembly **304** further has coolant fins **902** for coolant air to flow and extract the heat from the membrane electrode assembly **304.**

In an embodiment, humidifiers are also included in the membrane electrode assembly, such as, **304** and **308** of the fuel cell assemblies **103.** In the humidifier, humidified air is obtained on flowing dry inlet air on one side of the humidifier, since air from the inlet duct **106** may be dry. In an embodiment, the humidifier may be part of the aeration device **108** and may supply wet air at the inlet duct **106** of the fuel cell stack **100.** The wet air interacts with the membrane electrode assemblies **304** and **308,** thereby not affecting the performance of the fuel cell stack **100** due to a dry proton exchange membrane.

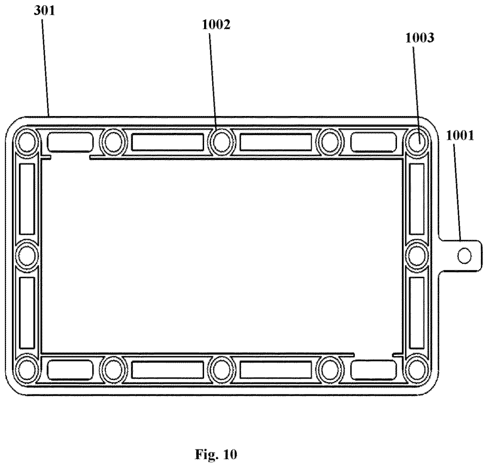

Fig. **10** exemplarily illustrates an elevation view of one of the current collector plates **301** or **311** of the fuel cell stack **100.** The current collector plate **301** or **311** has a current collector tab **1001** extending from a side to facilitate connection of the fuel cell stack **100** to an external circuit to draw current from the fuel cell stack **100.** The current collector plate **301** or **311** also includes guide holes, such as, **1002** and **1003** to engage with the fasteners **107** to hold the fuel cell stack **100** intact. The current collector plate **301** towards the cathode surface **304a** of the membrane electrode assembly **304** caters as a current collector for air side of the fuel cell stack **100** and the current collector plate **311** towards the anode surface **308b** of the membrane electrode assembly **308** caters as a current collector for hydrogen side of the fuel cell stack **100.** The external circuit is connected between the current collector tab **1001** of the current collector plates **301** and **311** to draw current from the fuel cell stack **100.** Current (amperes), voltage, frequency, and other characteristics of the electrical current in the external circuit connected to the current collector plates **301** and **311** are conditioned to suit the electrical needs of application of the fuel cell stack **100.**

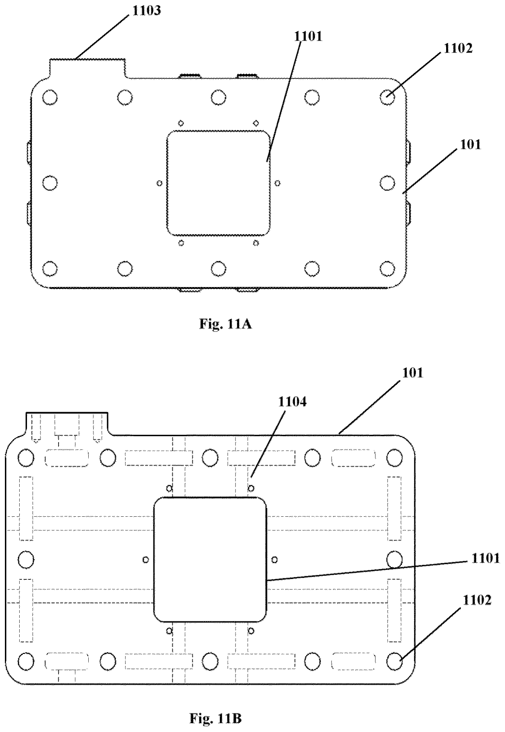

Figs. **11A-11B** exemplarily illustrate elevation view of a front surface and a rear surface of the end plate **101** of the fuel cell stack **100,** respectively. The end plate **101** provides mechanical support to the fuel cell stack **100.** The bipolar flow field plate **306,** the membrane electrode assemblies **304** and **308,** the monopolar flow field plates **302** and **310,** the current collector plates **301** and **311,** and the end plates **101** and **102** are parallel to each other in the fuel cell stack **100.** The end plates **101** and **102** are sturdy to support the fuel cell stack **100** and uniformly distribute the compression forces to the fuel cell assemblies **103** in the fuel cell stack **100.** The end plates **101** and **102** have substantially high compressive strength, vibration and shock resistance, and stable over the low temperatures of about 20°C to about 80°C. The materials used for the end plates **101** and **102** may be stainless steel, aluminum, titanium, nickel, polyethylene, poly vinyl chloride, etc.

Both the end plates **101** and **102** include an opening, such as, **1101** in the center to accommodate connection of the inlet duct **106** and the outlet duct **110** to the end plates **101** and **102** respectively. The end plate **101** accommodates connections to the hydrogen outlet manifold **114** for hydrogen in the fuel cell stack **100.** The end plate **101** has guide holes **1102** similar and in-line to the guide holes **411** and **412** of the bipolar flow field plate **306** to insert tie rods and fasten the tie rods with a nut to hold the fuel cell stack **100** sturdy. The end plate **101** has a projection at an upper end that connects the inlet duct **106** to the inlet piping **109** to supply the reactant air to the fuel cell assemblies **103** in the fuel cell stack **100.**

The end plate **102** at the other end of the fuel cell stack **100** accommodates connections to the inlet manifold **104** and the outlet manifold **105** of reactant air on the sides as exemplarily illustrated in Figs. **1A-1B**. The inlet manifold **104** in the end plate **102** is connected to hydrogen inlet header of the monopolar flow field plate **302** and the hydrogen inlet header **502** of the bipolar flow field plate **306** and the outlet manifold **114** of hydrogen in the end plate **101** is connected to the hydrogen outlet header of the monopolar flow field plate **310** and the hydrogen outlet header **503** of the bipolar flow field plate **306.** The inlet manifold **104** is connected to valves via external conduits to supply measured amount of hydrogen to the fuel cell stack **100.** The unused heated hydrogen in the fuel cell stack **100** is ejected out through the outlet manifold **114.** The outlet manifold **114** may be connected to valves, heat exchangers, and any other desired balance-of-plant components to utilize the ejected water vapor. On the rear surface of the end plate **101,** multiple coolant channels **1104** are provided that connect holes in side walls of the opening **1101** to the coolant fins **407** in the bipolar flow field plate **306,** the coolant fins **902** in the membrane electrode assembly **304,** and the coolant fins of the monopolar flow field plate.

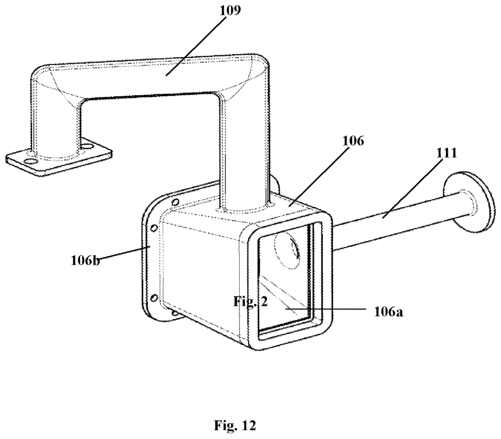

Fig. **12** exemplarily illustrates a front perspective view of the inlet duct **106** positioned on the end plate **101** and associated mounting means. The front opening **106a** of the inlet duct **106** engages with the discharge of the aeration device **108.** The rear opening **106b** of the inlet duct **106** corresponds to the opening **1101** in the end plate **101.** The inlet duct **106** is removably attached to the end plate **101** by means of, for example, fasteners. The reactant air and the coolant air are passed through the inlet duct **106** to the fuel cell assemblies **103** in the fuel cell stack **100.** Oxygen in the air participates in the electrochemical reactions in the fuel cell stack **100.** A stoichiometric amount of the reactant air and the coolant air are blown into the inlet duct **109** by the aeration device **108** to react with the measured amount of hydrogen entering through the inlet manifold **104.** The amount of reactant air involved in the reaction is controlled in the inlet duct **106.** The reactant air is fed via the inlet piping **109.** Since the electrochemical reaction is an exothermic reaction, heat generated in the fuel cell assemblies **103** is transmitted to the bipolar flow field plate **306,** the monopolar flow field plates **302** and **310,** and the membrane electrode assemblies **304** and **308.** The water vapor generated in the electrochemical reaction absorbs some heat and an active coolant, such as, the coolant air flowing through the coolant channels and coolant fins in the fuel cell stack **100** absorbs the remaining heat in the fuel cell assemblies **103.**

The hot air along with the water vapor from the fuel cell assemblies **103** is collected in the outlet duct **110.** The heat in the hot air and the water vapor is extracted by means of an external heat exchanger installed in the recirculation piping **111.** The hot air exchanges its heat with a fluid in the heat exchanger and the temperature of the hot air is reduced to room temperature. The air at room temperature mixes with the ambient air at the discharge of the aeration device **108** and is supplied to the fuel cell stack **100** via the air inlet duct **106.** The water content in the water vapor may be utilized to humidify the air at the air inlet duct **106.** Hydrogen at the inlet manifold **104** is pumped at a higher pressure compared to air at the inlet duct **106.** This prevents crossover of reactants and improves stability of the fuel cell assemblies **103.**

Further, the aeration device **108** is housed in the housing **115** and the housing **115** is supported by the mounting means, such as, clamps, brackets, clamp washers, etc., via fasteners, such as, nut and bolts. The performance of the fuel cell stack **100** depends on the pressure of the reactant gases, hydrogen and air. The aeration device **108,** such as, the blower ensures the pressure of air at the discharge of the aeration device **108** is about 2-4 times the ambient atmospheric pressure. Fan speed of the aeration device **108** is adjusted to vary the flow rate of the air supplied to the fuel cell assemblies **103.** The amount of stoichiometric oxygen into the fuel cell stack **100** is manipulated by a controller which regulates the electrical power of the aeration device, thereby controlling the compression and air flow into the fuel cell stack **100.**

The fuel cell stack **100** is portable and may function as a backup power generator. The fuel cell stack **100** offers extended runtime, high reliability, high efficiency, and reduced environmental impact. The fuel cell stack **100** can be used in laptops, military equipment, battery chargers, vehicles, etc., as a primary power source or a backup power source. The fuel cell stack **100** provides a technical advancement in battery technology as follows: The fuel cell stack **100** converts chemical potential energy directly into electrical energy. Such a fuel cell stack **100** on implementation in an electric vehicle acts as a primary source of electricity and is highly efficient since it avoids thermal bottle neck that usually occurs in an IC engine vehicle. The emissions from such an electric vehicle is only water vapor and a little heat. The heat is also extracted from the fuel cell assemblies **103** using the external heat exchanger. The fuel cell stack **100** is efficient since the exhaust is only water vapor and heat from the fuel cell stack **100,** and not greenhouse gases that are harmful to the environment. The fuel cell stack **100** has no moving parts, and thus is much more reliable than traditional IC engines. The reactants supplied to the fuel cell stack **100** are hydrogen and air and hydrogen may be produced in an environmentally friendly manner, in contrast to oil extraction and refining for the IC engines.

The bypass grooves **408** and **504** in the first flow channels **401** and the second flow channels **501** of the bipolar flow field plate **306** of the fuel cell stack **100** facilitate the reactants to bypass the path of gases, if there is any blockage due to water stagnation as in case of low temperature fuel cell and due to GDL blockage. The bypass grooves **408** and **504** also help the reactants to have a crisscross path in the flow field which makes the gas to cover the entire active region of the membrane electrode assembly **304** and **308.** The design of the elastic members **303, 305, 307,** and **309** is same and simple for both the surfaces **306a** and **306b** of the bipolar flow field plate **306.** The elastic members **303, 305, 307,** and **309** provide the required sealing for the reactants to avoid leakage and crossover by sitting into the groove in the bipolar flow field plate **306** without any mismatch. The cooling of the fuel cell stack **100** is by a simple installation of an aeration device **110,** such as a blower. The issue of water logging in the fuel cell stack **100** is eliminated due to the serpentine flow channels **401** and **501** on both the surfaces **306a** and **306b** of the bipolar flow field plate **306.** The serpentine flow channels **401** and **501** distribute the reactants uniformly over the membrane electrode assembly **303,** thus increase efficiency of the fuel cell stack **100.** The stopper rib **413** on both the surfaces **306a** and **306b** of the bipolar flow field plate **306** ensures safe compression of the fuel cell assemblies **103** in the fuel call stack **100.** The method of assembly of such a fuel cell stack **100** using the guides **202** and the guide holes **201** is also simple.

## Claims

1. A bipolar flow field plate (306) for being positioned between a pair of membrane assemblies of fuel cell assemblies (103), the bipolar flow field plate (306) comprising:
a front surface (306b) comprising at least one serpentine first flow channel (401) extending between an air inlet header (402) and an air outlet header (403) for reactant air, wherein each of the at least one first flow channel (401) comprises a plurality of first bypass grooves (408) for bypassing one or more sections (409a) of the at least one first flow channel (401);
a rear surface (306a) comprising at least one serpentine second flow channel (501) extending between a hydrogen inlet header (502) and a hydrogen outlet header (503) for hydrogen, wherein each of the at least one second flow channel (501) comprises a plurality of second bypass grooves (504) for bypassing one or more sections (505) of the at least one second flow channel (501); and
a plurality of coolant fins (404, 405, 406, 407) for coolant air formed on the front surface (306b) and the rear surface (306a) between the air inlet header (402), the air outlet header (403), the hydrogen inlet header (502), and the hydrogen outlet header (503).

2. The bipolar flow field plate (306) of claim 1, further comprises a stopper rib (413) formed on edges of each of the front surface (306b) and the rear surface (306a), for preventing excessive compression of an elastic member (305, 307), wherein the elastic member (305 and 307) is accommodated in a groove (410) formed parallel to the stopper rib (413) on the each of the front surface (306b) and the rear surface (306a).

3. The bipolar flow field plate (306) of claim 2, wherein the elastic member 305, 307) is in one of pre-cut form and formed-in-place by curing using activation and exposure to radiation during assembling of the pair of fuel cell assemblies (103).

4. The bipolar flow field plate (306) of claim 1, wherein the air inlet header (402) and the air outlet header (403) are one of in-line and perpendicular to the hydrogen inlet header (502) and the hydrogen outlet header (503).

5. The bipolar flow field plate (306) of claim 1,
wherein the air inlet header (402), the air outlet header (403), and the plurality of coolant fins (404, 405, 406, 407) engage in use with a discharge of an aeration device (108); and
wherein the hydrogen inlet header (502) and the hydrogen outlet header (503) engage with in use an inlet manifold (112) and an outlet manifold (113) for hydrogen on a pair of end plates (101, 102).

6. The bipolar flow field plate (306) of claim 1, wherein in use, reactant air and hydrogen reactively engage with a membrane electrode assembly (304, 308) in each of the pair of fuel cell assemblies (103) for supplying electric current to an electric circuit.

7. The bipolar flow field plate (306) of claim 5, wherein, in use:
the reactant air from the at least one serpentine first flow channel (401) diffuses towards a cathode surface (308a) of the membrane electrode assembly (308), and
hydrogen from the at least one serpentine second flow channel (501) diffuses towards an anode surface (304b) of the membrane electrode assembly (304).

8. The bipolar flow field plate (306) of claim 1, wherein an aeration device (108) is one of a blower and a centrifugal pump.

9. A fuel cell stack (100) comprising:
a pair of end plates (101, 102) accommodating an aeration device (108), an inlet manifold (112) for hydrogen, and an outlet manifold (113) for hydrogen on an outer surface; and
a plurality of fuel cell assemblies (103) positioned between the pair of end plates (101 and 102), wherein a pair of fuel cell assemblies (103a, 103b) in the plurality of fuel cell assemblies (103) comprises:
a pair of membrane electrode assemblies (304 and 308), each of a first membrane electrode assembly (304) and a second membrane electrode assembly (308) comprising an anode face (304b, 308b) and a cathode face (304a, 308a); and
a bipolar flow field plate (306) positioned between the first membrane electrode assembly (304) and the second membrane electrode assembly (308), the bipolar flow field plate (306) comprises:
a front surface (306b) comprising at least one serpentine first flow channel (401) extending between an air inlet header (402) and an air outlet header (403) for the reactant air;
a rear surface (306a) comprising at least one serpentine second flow channel (501) extending between a hydrogen inlet header (502) and a hydrogen outlet header (503) for hydrogen; and
a plurality of coolant fins (404, 405, 406, 407) for coolant air formed on the front surface (306b) between the air inlet header (402), the air outlet header (403), the hydrogen inlet header (502), and the hydrogen outlet header (503).

10. The fuel cell stack (100) of claim 9, wherein the bipolar flow field plate (306) further comprises a stopper rib (413) formed on edges of each of the front surface (306b) and the rear surface (306a), for preventing excessive compression of an elastic member (305, 307), wherein the elastic member (305, 307) is accommodated in a groove (410) formed parallel to the stopper rib (413) on the each of the front surface (306b) and the rear surface (306a).

11. The fuel cell stack (100) of claim 10, wherein the elastic member (305, 307) is in one of pre-cut form and formed-in-place by curing using activation and exposure to radiation during assembling of the fuel cell stack (100).

12. The fuel cell stack of claim 9, wherein the at least one serpentine first flow channel (401) comprises a plurality of first bypass grooves (408) for bypassing one or more sections of the at least one first flow channel (401) and the at least one serpentine second flow channel (501) comprises a plurality of second bypass grooves (504) for bypassing one or more sections (505) of the at least one second flow channel (501).

13. The fuel cell stack of claim 9, further comprises a pair of current collector plates (301, 311) for collecting electric current generated in the plurality of fuel cell assemblies (103), wherein each current collector plate (301, 303), is positioned between an end plate (101, 102) and one of the first membrane electrode assembly (304) or the second membrane electrode assembly (308).

14. The fuel cell stack of claim 13, wherein a plurality of fasteners (107) compress the pair of end plates (101, 102), the plurality of fuel cell assemblies (103), and the pair of current collector plates (301, 311) together.

## Patentansprüche

1. Bipolare Strömungsfeldplatte (306) zur Positionierung zwischen einem Paar von Membrananordnungen von Brennstoffzellenanordnungen (103), wobei die bipolare Strömungsfeldplatte (306) umfasst:
eine vordere Oberfläche (306b), die mindestens einen serpentinenförmigen ersten Strömungskanal (401) umfasst, der sich zwischen einem Lufteinlasssammler (402) und einem Luftauslasssammler (403) für Reaktantenluft erstreckt, wobei jeder des mindestens einen ersten Strömungskanals (401) eine Vielzahl von ersten Bypass-Nuten (408) zum Umgehen eines oder mehrerer Abschnitte (409a) des mindestens einen ersten Strömungskanals (401) umfasst;
eine hintere Fläche (306a), die mindestens einen serpentinenförmigen zweiten Strömungskanal (501) umfasst, der sich zwischen einem Wasserstoffeinlasssammler (502) und einem Wasserstoffauslasssammler (503) für Wasserstoff erstreckt, wobei jeder des mindestens einen zweiten Strömungskanals (501) eine Vielzahl von zweiten Umgehungsnuten (504) zum Umgehen eines oder mehrerer Abschnitte (505) des mindestens einen zweiten Strömungskanals (501) umfasst; und
eine Mehrzahl von Kühlmittelrippen (404, 405, 406, 407) für Kühlmittelluft, die auf der vorderen Oberfläche (306b) und der hinteren Oberfläche (306a) zwischen dem Lufteinlasskopf (402), dem Luftauslasskopf (403), dem Wasserstoffeinlasskopf (502) und dem Wasserstoffauslasskopf (503) ausgebildet sind.

2. Bipolare Strömungsfeldplatte (306) nach Anspruch 1 umfasst ferner eine Anschlagrippe (413), die an den Kanten sowohl der vorderen Oberfläche (306b) als auch der hinteren Oberfläche (306a) ausgebildet ist, um ein übermäßiges Zusammendrücken eines elastischen Elements (305, 307) zu verhindern, wobei das elastische Element (305, 307) in einer Nut (410) untergebracht ist, die parallel zu der Anschlagrippe (413) sowohl auf der vorderen Oberfläche (306b) als auch auf der hinteren Oberfläche (306a) ausgebildet ist.

3. Bipolare Strömungsfeldplatte (306) nach Anspruch 2, wobei das elastische Element (305, 307) entweder vorgeschnitten oder durch Aushärten unter Verwendung von Aktivierung und Bestrahlung während des Zusammenbaus des Paars von Brennstoffzelleneinheiten (103) an Ort und Stelle geformt ist.

4. Bipolare Strömungsfeldplatte (306) nach Anspruch 1, wobei der Lufteinlasssammler (402) und der Luftauslasssammler (403) entweder in Reihe oder senkrecht zu dem Wasserstoffeinlasssammler (502) und dem Wasserstoffauslasssammler (503) angeordnet sind.

5. Bipolare Strömungsfeldplatte (306) nach Anspruch 1,
wobei der Lufteinlasssammler (402), der Luftauslasssammler (403) und die Vielzahl von Kühlmittelrippen (404, 405, 406, 407) im Gebrauch mit einem Auslass einer Belüftungsvorrichtung (108) in Eingriff stehen; und
wobei der Wasserstoffeinlasssammler (502) und der Wasserstoffauslasssammler (503) bei der Verwendung mit einem Einlassverteiler (112) und einem Auslassverteiler (113) für Wasserstoff an einem Paar von Endplatten (101, 102) in Eingriff stehen.

6. Bipolare Strömungsfeldplatte (306) nach Anspruch 1, wobei im Gebrauch reaktive Luft und Wasserstoff mit einer Membranelektrodenanordnung (304, 308) in jeder des Paars von Brennstoffzellenanordnungen (103) in Eingriff kommen, um einen elektrischen Strom an einen Stromkreis zu liefern.

7. Bipolare Strömungsfeldplatte (306) nach Anspruch 5, bei der im Betrieb:
die reaktive Luft aus dem mindestens einen serpentinenförmigen ersten Strömungskanal (401) zu einer Kathodenoberfläche (308a) der Membranelektrodenanordnung (308) diffundiert, und
Wasserstoff aus dem mindestens einen serpentinenförmigen zweiten Strömungskanal (501) in Richtung einer Anodenoberfläche (304b) der Membranelektrodenanordnung (304) diffundiert.

8. Bipolare Strömungsfeldplatte (306) nach Anspruch 1, wobei eine Belüftungsvorrichtung (108) entweder ein Gebläse oder eine Zentrifugalpumpe ist.

9. Brennstoffzellenstapel (100), umfassend:
ein Paar von Endplatten (101, 102), die eine Belüftungsvorrichtung (108), einen Einlassverteiler (112) für Wasserstoff und einen Auslassverteiler (113) für Wasserstoff auf einer Außenfläche aufnehmen; und
eine Vielzahl von Brennstoffzellenbaugruppen (103), die zwischen dem Paar von Endplatten (101 und 102) angeordnet sind, wobei ein Paar von Brennstoffzellenbaugruppen (103a, 103b) in der Vielzahl von Brennstoffzellenbaugruppen (103) umfasst:
ein Paar von Membranelektrodenanordnungen (304 und 308), wobei jede von einer ersten Membranelektrodenanordnung (304) und einer zweiten Membranelektrodenanordnung (308) eine Anodenfläche (304b, 308b) und eine Kathodenfläche (304a, 308a) umfasst; und
eine bipolare Strömungsfeldplatte (306), die zwischen der ersten Membranelektrodenanordnung (304) und der zweiten Membranelektrodenanordnung (308) angeordnet ist, wobei die bipolare Strömungsfeldplatte (306) Folgendes umfasst:
eine vordere Oberfläche (306b), die mindestens einen serpentinenförmigen ersten Strömungskanal (401) umfasst, der sich zwischen einem Lufteinlasssammler (402) und einem Luftauslasssammler (403) für die Reaktantenluft erstreckt;
eine Rückfläche (306a), die mindestens einen serpentinenförmigen zweiten Strömungskanal (501) umfasst, der sich zwischen einem Wasserstoffeinlasssammler (502) und einem Wasserstoffauslasssammler (503) für Wasserstoff erstreckt; und
eine Vielzahl von Kühlmittelrippen (404, 405, 406, 407) für Kühlmittelluft, die auf der Vorderfläche (306b) zwischen dem Lufteinlasssammler (402), dem Luftauslasssammler (403), dem Wasserstoffeinlasssammler (502) und dem Wasserstoffauslasssammler (503) ausgebildet sind.

10. Brennstoffzellenstapel (100) nach Anspruch 9, wobei die bipolare Strömungsfeldplatte (306) ferner eine Anschlagrippe (413) aufweist, die an den Kanten sowohl der vorderen Oberfläche (306b) als auch der hinteren Oberfläche (306a) ausgebildet ist, um eine übermäßige Kompression eines elastischen Elements (305, 307) zu verhindern, wobei das elastische Element (305, 307) in einer Nut (410) untergebracht ist, die parallel zu der Anschlagrippe (413) sowohl auf der vorderen Oberfläche (306b) als auch auf der hinteren Oberfläche (306a) ausgebildet ist.

11. Brennstoffzellenstapel (100) nach Anspruch 10, wobei das elastische Element (305, 307) entweder eine vorgeschnittene Form aufweist oder durch Aushärten unter Verwendung von Aktivierung und Bestrahlung während des Zusammenbaus des Brennstoffzellenstapels (100) an Ort und Stelle geformt wird.

12. Brennstoffzellenstapel nach Anspruch 9, wobei der mindestens eine serpentinenförmige erste Strömungskanal (401) eine Mehrzahl von ersten Bypass-Nuten (408) zum Umgehen eines oder mehrerer Abschnitte des mindestens einen ersten Strömungskanals (401) umfasst und der mindestens eine serpentinenförmige zweite Strömungskanal (501) eine Mehrzahl von zweiten Bypass-Nuten (504) zum Umgehen eines oder mehrerer Abschnitte (505) des mindestens einen zweiten Strömungskanals (501) umfasst.

13. Der Brennstoffzellenstapel nach Anspruch 9 umfasst ferner ein Paar Stromkollektorplatten (301, 311) zum Sammeln des in den mehreren Brennstoffzelleneinheiten (103) erzeugten elektrischen Stroms, wobei jede Stromkollektorplatte (301, 303) zwischen einer Endplatte (101, 102) und einer der ersten Membranelektrodeneinheit (304) oder der zweiten Membranelektrodeneinheit (308) angeordnet ist.

14. Brennstoffzellenstapel nach Anspruch 13, wobei eine Vielzahl von Befestigungselementen (107) das Paar von Endplatten (101, 102), die Vielzahl von Brennstoffzellenbaugruppen (103) und das Paar von Stromabnehmerplatten (301, 311) zusammenpressen.

## Revendications

1. Plaque de champ d'écoulement bipolaire (306) destinée à être positionnée entre une paire d'assemblages de membranes d'assemblages de piles à combustible (103), la plaque de champ d'écoulement bipolaire (306) comprenant :
une surface avant (306b) comprenant au moins un premier canal d'écoulement serpentin (401) s'étendant entre un collecteur d'entrée d'air (402) et un collecteur de sortie d'air (403) pour l'air réactif, dans lequel chacun des au moins un premier canal d'écoulement (401) comprend une pluralité de premières rainures de dérivation (408) pour la dérivation d'une ou plusieurs sections (409a) du au moins un premier canal d'écoulement (401) ;
une surface arrière (306a) comprenant au moins un second canal d'écoulement serpentin (501) s'étendant entre un collecteur d'entrée d'hydrogène (502) et un collecteur de sortie d'hydrogène (503) pour l'hydrogène, dans lequel chacun des au moins un second canal d'écoulement (501) comprend une pluralité de secondes rainures de dérivation (504) pour la dérivation d'une ou plusieurs sections (505) du au moins un second canal d'écoulement (501) ; et
plusieurs ailettes de refroidissement (404, 405, 406, 407) pour l'air de refroidissement formées sur la surface avant (306b) et la surface arrière (306a) entre le collecteur d'entrée d'air (402), le collecteur de sortie d'air (403), le collecteur d'entrée d'hydrogène (502) et le collecteur de sortie d'hydrogène (503).

2. Plaque de champ d'écoulement bipolaire (306) de la revendication 1 comprend en outre une nervure d'arrêt (413) formée sur les bords de la surface avant (306b) et de la surface arrière (306a), pour empêcher la compression excessive d'un élément élastique (305, 307), l'élément élastique (305, 307) étant logé dans une rainure (410) formée parallèlement à la nervure d'arrêt (413) sur la surface avant (306b) et sur la surface arrière (306a).

3. Plaque de champ d'écoulement bipolaire (306) de la revendication 2, dans laquelle l'élément élastique (305, 307) se présente sous l'une des formes suivantes : prédécoupé ou formé sur place par durcissement au moyen d'une activation et d'une exposition à un rayonnement pendant l'assemblage de la paire d'assemblages de piles à combustible (103).

4. Plaque de champ d'écoulement bipolaire (306) de la revendication 1, dans laquelle le collecteur d'entrée d'air (402) et le collecteur de sortie d'air (403) sont l'un en ligne et perpendiculaires au collecteur d'entrée d'hydrogène (502) et au collecteur de sortie d'hydrogène (503).

5. Plaque de champ d'écoulement bipolaire (306) de la revendication 1,
dans laquelle le collecteur d'entrée d'air (402), le collecteur de sortie d'air (403) et la pluralité d'ailettes de refroidissement (404, 405, 406, 407) s'engagent dans une décharge d'un dispositif d'aération (108) ; et
dans lequel le collecteur d'entrée d'hydrogène (502) et le collecteur de sortie d'hydrogène (503) sont en contact avec un collecteur d'entrée (112) et un collecteur de sortie (113) pour l'hydrogène sur une paire de plaques d'extrémité (101, 102).

6. Plaque de champ d'écoulement bipolaire (306) de la revendication 1, dans laquelle, en cours d'utilisation, l'air et l'hydrogène réactifs entrent en contact avec un assemblage d'électrodes à membrane (304, 308) dans chacun des deux assemblages de piles à combustible (103) pour fournir un courant électrique à un circuit électrique.

7. Plaque de champ à flux bipolaire (306) de la revendication 5, dans laquelle, en cours d'utilisation :
l'air réactif provenant d'au moins un premier canal d'écoulement serpentin (401) diffuse vers une surface cathodique (308a) de l'ensemble membrane-électrode (308), et
l'hydrogène provenant d'au moins un deuxième canal d'écoulement en serpentin (501) diffuse vers une surface anodique (304b) de l'assemblage d'électrodes à membrane (304).

8. Plaque de champ d'écoulement bipolaire (306) de la revendication 1, dans laquelle un dispositif d'aération (108) est l'un des dispositifs suivants : une soufflante et une pompe centrifuge.

9. L'empilement de piles à combustible (100) comprenant
une paire de plaques d'extrémité (101, 102) accueillant un dispositif d'aération (108), un collecteur d'entrée (112) pour l'hydrogène et un collecteur de sortie (113) pour l'hydrogène sur une surface extérieure ; et
une pluralité d'assemblages de piles à combustible (103) positionnés entre la paire de plaques d'extrémité (101 et 102), dans lesquels une paire d'assemblages de piles à combustible (103a, 103b) dans la pluralité d'assemblages de piles à combustible (103) comprend :
une paire d'assemblages membrane-électrode (304 et 308), chacun d'un premier assemblage membrane-électrode (304) et d'un second assemblage membrane-électrode (308) comprenant une face anodique (304b, 308b) et une face cathodique (304a, 308a) ; et
une plaque de champ d'écoulement bipolaire (306) placée entre le premier ensemble membrane-électrode (304) et le deuxième ensemble membrane-électrode (308), la plaque de champ d'écoulement bipolaire (306) comprend :
une surface avant (306b) comprenant au moins un premier canal d'écoulement serpentin (401) s'étendant entre un collecteur d'entrée d'air (402) et un collecteur de sortie d'air (403) pour l'air réactif ;
une surface arrière (306a) comprenant au moins un deuxième canal d'écoulement en serpentin (501) s'étendant entre un collecteur d'entrée d'hydrogène (502) et un collecteur de sortie d'hydrogène (503) pour l'hydrogène ; et
une pluralité d'ailettes de refroidissement (404, 405, 406, 407) pour l'air de refroidissement formées sur la surface avant (306b) entre le collecteur d'entrée d'air (402), le collecteur de sortie d'air (403), le collecteur d'entrée d'hydrogène (502) et le collecteur de sortie d'hydrogène (503).

10. L'empilement de piles à combustible (100) de la revendication 9, dans lequel la plaque de champ d'écoulement bipolaire (306) comprend en outre une nervure d'arrêt (413) formée sur les bords de la surface avant (306b) et de la surface arrière (306a), pour empêcher la compression excessive d'un élément élastique (305, 307), dans lequel l'élément élastique (305, 307) est logé dans une rainure (410) formée parallèlement à la nervure d'arrêt (413) sur la surface avant (306b) et sur la surface arrière (306a).

11. L'empilement de piles à combustible (100) de la revendication 10, dans lequel l'élément élastique (305, 307) se présente sous l'une des formes suivantes : prédécoupé ou formé sur place par durcissement par activation et exposition à un rayonnement pendant l'assemblage de l'empilement de piles à combustible (100).

12. L'empilement de piles à combustible de la revendication 9, dans lequel au moins un premier canal d'écoulement en serpentin (401) comprend une pluralité de premières rainures de dérivation (408) pour contourner une ou plusieurs sections du au moins un premier canal d'écoulement (401) et au moins un deuxième canal d'écoulement en serpentin (501) comprend une pluralité de deuxièmes rainures de dérivation (504) pour contourner une ou plusieurs sections (505) du au moins un deuxième canal d'écoulement (501).

13. L'empilement de piles à combustible de la revendication 9 comprend en outre une paire de plaques collectrices de courant (301, 311) pour recueillir le courant électrique généré dans la pluralité d'assemblages de piles à combustible (103), chaque plaque collectrice de courant (301, 303) étant positionnée entre une plaque d'extrémité (101, 102) et l'un des assemblages de la première électrode à membrane (304) ou de la deuxième électrode à membrane (308).

14. L'empilement de piles à combustible de la revendication 13, dans lequel plusieurs fixations (107) compriment la paire de plaques d'extrémité (101, 102), la pluralité d'assemblages de piles à combustible (103) et la paire de plaques collectrices de courant (301, 311).
